# EUROPEAN PATENT SPECIFICATION

(11) **EP 1 625 515 B1**
(45) Date of publication and mention of the grant of the patent: **05.09.2018**
(21) Application number: 03729008.7
(22) Date of filing: 17.05.2003
(51) Int. Cl.: G06F 17/21, G06F 17/22

(54) **SYSTEM AND METHOD FOR PROVIDING MULTIPLE RENDITIONS OF DOCUMENT CONTENT**
SYSTEM UND VERFAHREN ZUR BEREITSTELLUNG VON MEHRFACHWIEDERGABEN EINES DOKUMENTINHALTS
SYSTÈMES ET PROCÉDÉ PERMETTANT D'OBTENIR DIFFÉRENTS RENDUS DU CONTENU D'UN DOCUMENT

(43) Date of publication of application: 15.02.2006
(73) Proprietor: Zhigu Holdings Limited, Grand Cayman KY1-1002 (KY)
(72) Inventor: ORNSTEIN, David, B., Seattle, WA 98115 (US); SENDER, Ilan, Bellevue, WA 98007 (US); KING, Joseph, Seattle, WA 98103 (US); KIM, Young, Gah, Bothell, WA 98021 (US); CAHILL, Jason, M., Carnation, WA 98014 (US); BRINTZENHOFE, Keith, S., Redmond, WA 98052 (US)
(74) Representative: Grünecker Patent- und Rechtsanwälte PartG mbB
(86) International application number: PCT/US2003/015705
(87) International publication number: WO 2004/107214

(56) References cited:
- EP-A- 0 346 259
- US-A1- 2002 143 623
- US-B1- 6 230 173
- NETWORK WORKING GROUP: "RFC 2046 Multipurpose Internet Mail Extensions (MIME) Part Two: Media Types"[Online] November 1996 (1996-11), XP002443822 Retrieved from the Internet: URL:http://tools.ietf.org/html/rfc2046#sec tion-5.1.4> [retrieved on 2007-07-24]
- Anonymous: "RFC 2049 - Multipurpose Internet Mail Extensions (MIME) Part Five: Conformance Criteria and Examples", , 30 November 1996 (1996-11-30), XP055346011, Retrieved from the Internet: URL:https://tools.ietf.org/html/rfc2049#pa ge-15 [retrieved on 2017-02-15]
- Network Working Group: "Communicating Presentation Information in Internet Messages", , 1 August 1997 (1997-08-01), XP055346094, Retrieved from the Internet: URL:https://www.ietf.org/rfc/rfc2183.txt [retrieved on 2017-02-15]

## Description

This application is being filed as a PCT application filed May 17, 2003 by MICROSOFT CORPORATION., a United States national and resident, designating all countries except US.

### Field of the Invention

The present invention relates to electronic documents. More particularly, the present invention relates to a data storage format for multiple electronic documents.

### Background of the Invention

Computer users today have a wide variety of vehicles with which to view electronic documents. Desktop computers, laptop computers, pocket-sized computers, and tablet computers or just a few examples of the many different types of devices with which a user may view electronic documents. Each of these types of devices has a different form factor and displays documents slightly differently. For instance, a PDA has a very different viewable area than a monitor used with a desktop computer. The desktop computer probably has a different viewable area than the laptop computer. To compound the problem, electronic documents are created in very many different formats that may each have different viewing attributes.

Users are often presented with the problem that a particular document may display well on one device, such as a laptop computer, yet that document may not display well on another device, such as a PDA. Software developers have attempted to create a document format that is displayable on many different types of devices. For instance, a "reflowable" document representation, such as HTML, allowed for a certain amount of resizing when the window size changed without a serious detrimental impact on the layout of the document. However, using this format often hinders the document author's ability to control precisely how the document will appear. In addition, because reflowable documents are intended to be viewed somewhat well on many different devices, they do not necessarily provide an optimized viewing experience on any one device.

In contrast, formats that allow more control over how a document is displayed typically make the document applicable to a limited number of devices. For instance, a word processing document may be viewed on a desktop computer in a visually satisfactory manner. However, the word processing document, if displayed on a PDA may appear squished or otherwise inappropriate. In addition, a document created with a word processor for a particular size paper, such as letter-sized, may not print properly on another size paper, such as A4-sized.

Some document formats allow strict control over how the document is viewed by making the content of the document essentially a graphical image. One drawback of this document format is that several different versions of the entire document must be made available for each device upon which the document is intended to be viewed. In addition, the content of the fixed-format document is not editable.

NETWORK WORKING GROUP: "RFC 2046 Multipurpose Internet Mail Extension (MIME) Part Two: Media Types", November 1996, discusses the general structure of the multipurpose internet mail extension (MIME) media typing system and discusses an initial set of media types. In the "multipart/alternative" type each of the body parts is an "alternative" version of the same information.

NETWORK WORKING GROUP: "RFC 2049 Multipurpose Internet Mail Extension (MIME) Part Five: Conformance Criteria and Examples", November 1996, discusses a complex multipart message including plain text objects, an embedded multipart message, a text/enriched object, and a closing encapsulated text message in a non-ASCII character set. The embedded multipart message contains two objects to be displayed.

NETWORK WORKING GROUP: "Communicating Presentation Information in Internet Messages", August 1997, discusses that a bodypart of a message should be marked 'inline' if it is intended to be displayed automatically upon display of the message.

It is the object of the present invention to enable an improved storing of multiple renditions of a document in a single compound file.

This object is solved by the subject matter of the independent claims.

Preferred embodiments are defined by the dependent claims.

The present invention is directed at a system and method for providing multiple representations of document content within a single file. Briefly stated, the invention makes use of a compound file format to contain multiple streams of data, each stream of data being a rendition of the document content. Other resources that are used by one or multiple renditions are also stored within the compound file. Meta information is stored within the compound file that describes each rendition of the document content. The meta information may also include rules that are selection criteria to assist in identifying an appropriate rendition for a given device or application.

### Brief Description of the Drawings

FIGURE 1 is a functional block diagram that illustrates a computing device that may be used in implementations of the present invention.
FIGURE 2 is a functional block diagram generally illustrating components of a system having a compound file constructed in accordance with the present invention.
FIGURE 3 is a graphical representation of a tree hierarchy that represents the compound file shown in FIGURE 2.
FIGURE 4 is a tabular representation of information that may be contained within a compound file constructed in accordance with the present invention that describes each of multiple renditions within the compound file.
FIGURE 5 is a graphical illustration of one particular example of a compound file having several streams and one storage, in accordance with one implementation of the invention.
FIGURE 6 is a graphical illustration of another example of a compound file having several streams, in accordance with one implementation of the invention.
FIGURE 7 is a logical flow diagram generally illustrating a process for making an appropriate rendition within a compound file available to a requesting application, in accordance with the invention.
FIGURE 8 is a logical flow diagram generally illustrating a process for creating a multiple rendition compound file, in accordance with the invention.

### Detailed Description of the Preferred Embodiment

The invention provides a mechanism for providing a single document that include multiple representations of the same document content. Each of the representations may be optimized to provide a superior presentation for a particular device or application. The mechanism of the invention is preferably based on a compound file format that allows multiple renditions of the same content to be stored in a single document. Meta information is included within the single document that describes each of the multiple renditions together with any supporting files that may be used with those renditions. The inventors have determined that the Object Linking and Embedding (OLE) compound file format is especially well suited to implementations of the invention.

The invention will be described here first with reference to one example of an illustrative computing environment in which embodiments of the invention can be implemented. Next, a detailed example of one specific implementation of the invention will be described. Alternatives implementations may also be included with respect to certain details of the specific implementation. Finally, examples of implementations of compound files constructed in accordance with the invention are described. It will be appreciated that embodiments of the invention are not limited to those described here.

### Illustrative Computing Environment of the Invention

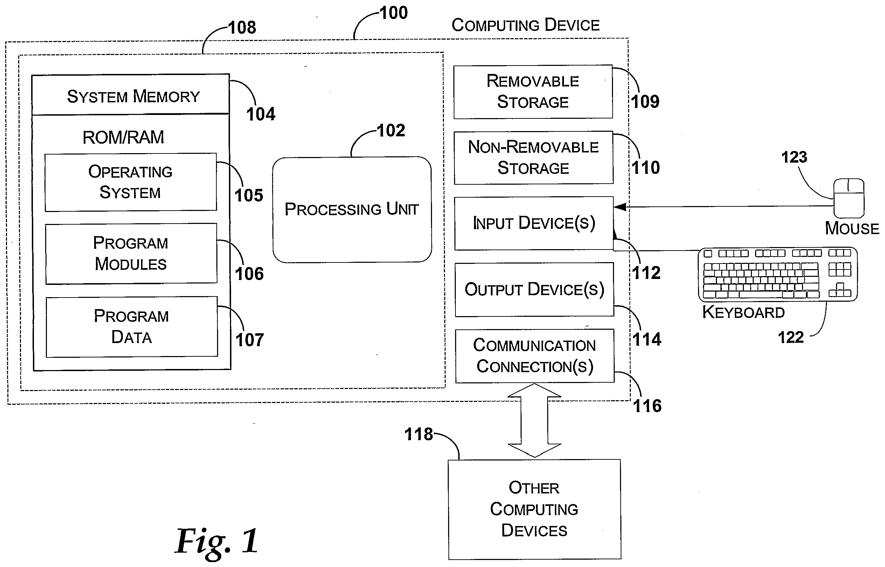

FIGURE 1 illustrates a computing device that may be used in illustrative implementations of the present invention. With reference to FIGURE 1, one exemplary system for implementing the invention includes a computing device, such as computing device **100.** In a very basic configuration, computing device **100** typically includes at least one processing unit **102** and system memory **104.** Depending on the exact configuration and type of computing device, system memory **104** may be volatile (such as RAM), non-volatile (such as ROM, flash memory, etc.) or some combination of the two. System memory **104** typically includes an operating system **105,** one or more program modules **106,** and may include program data **107.** This basic configuration of computing device **100** is illustrated in FIGURE 1 by those components within dashed line **108.**

Computing device **100** may have additional features or functionality. For example, computing device **100** may also include additional data storage devices (removable and/or non-removable) such as, for example, magnetic disks, optical disks, or tape. Such additional storage is illustrated in FIGURE 1 by removable storage **109** and non-removable storage **110.** Computer storage media may include volatile and nonvolatile, removable and non-removable media implemented in any method or technology for storage of information, such as computer readable instructions, data structures, program modules, or other data. System memory **104,** removable storage **109** and non-removable storage **110** are all examples of computer storage media. Computer storage media includes, but is not limited to, RAM, ROM, EEPROM, flash memory or other memory technology, CD-ROM, digital versatile disks ("DVD") or other optical storage, magnetic cassettes, magnetic tape, magnetic disk storage or other magnetic storage devices, or any other medium which can be used to store the desired information and which can be accessed by computing device **100.** Any such computer storage media may be part of device **100.** Computing device **100** may also have input device(s) **112** such as keyboard **122,** mouse **123,** pen, voice input device, touch input device, scanner, etc. Output device(s) **114** such as a display, speakers, printer, etc. may also be included. These devices are well known in the art and need not be discussed at length here.

Computing device **100** may also contain communication connections **116** that allow the device to communicate with other computing devices **118,** such as over a network. Communication connections **116** is one example of communication media. Communication media may typically be embodied by computer readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. The term computer readable media as used herein includes both storage media and communication media.

### General Discussion of Components

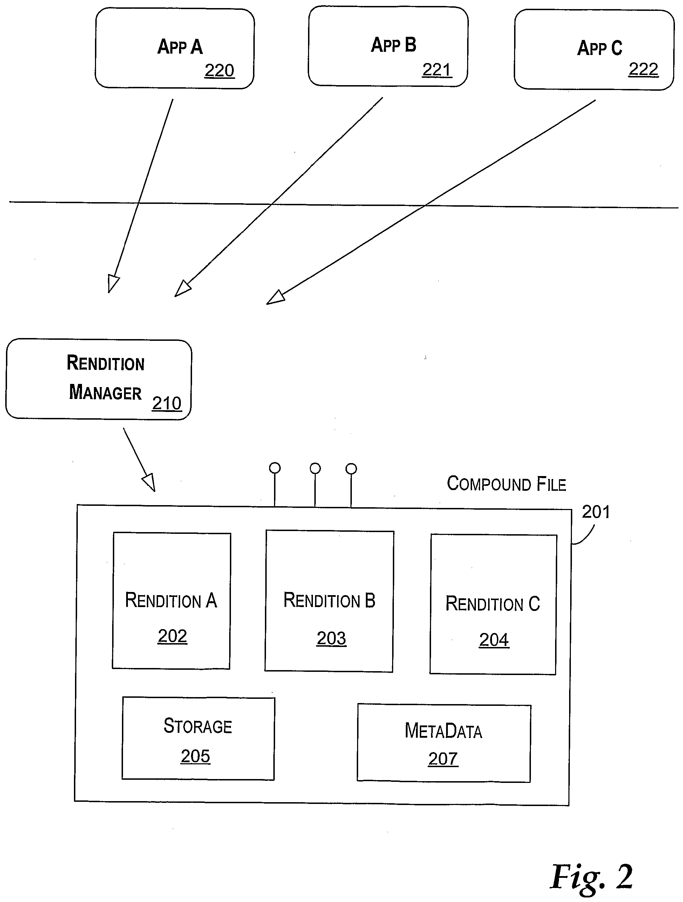

FIGURE 2 is a functional block diagram generally illustrating components of an environment implementing the present invention. Illustrated are several applications **220, 221, 222,** a "rendition manager" **210,** and a compound file **201.** Each of the applications **220, 221, 222** is configured to manipulate or display a document in a format particular to that application. For instance, application A **220** may be a word processor or the like, application B **221** may be an e-mail application capable of displaying HTML messages, and application C **222** may be a fixed-format document viewer, such as an image viewer or the like.

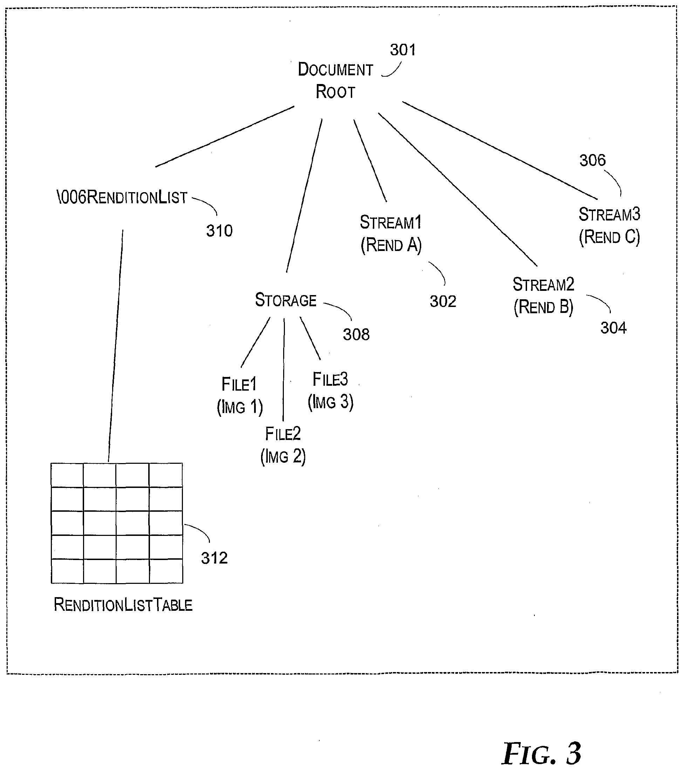

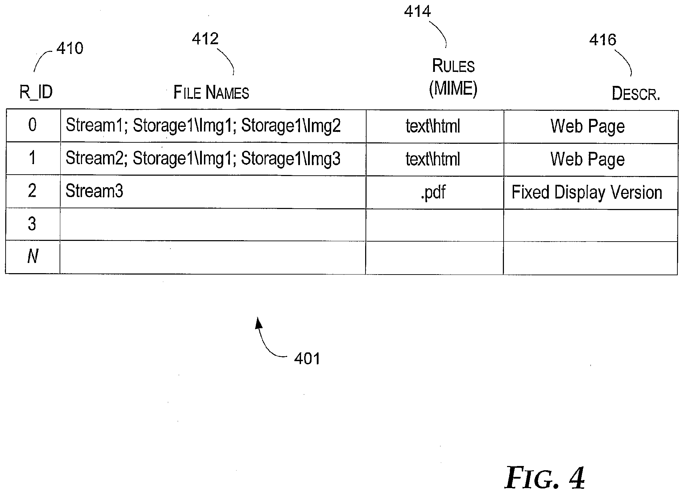

The compound file **201** is, preferably, an OLE compound file. The OLE document model is known in the art and is widely recognized as a mechanism for containing many disparate types of data within a single document. However, the OLE compound file is conventionally used in conjunction with the substance of a single document having embedded files or other support content that is also contained in the one OLE compound file. Importantly, each element in the compound file is stored in such a way that it can be manipulated by the application that created. The compound file **201** will be described in greater detail below in conjunction with Figures 3 and 4.

Briefly stated, the compound file **201** is a single file that includes multiple representations ("renditions") of particular document content. The representations may be visual or otherwise. Each rendition is "targeted for" (optimized for presentation on) a particular class of devices or media. For instance, rendition A **202** may be a word processing document, rendition B **203** may be a reflowable markup-language version of the word processing document, and rendition C **204** may be a fixed-format version of the word processing document. In addition to the multiple renditions, a storage **205** is included in the compound file **201** to contain other files or resources that may be used by one or more of the multiple renditions **202, 203, 204.** Metadata **207** includes information that describes each of the multiple renditions **202, 203, 204,** including which support files in the storage **205** are used in conjunction with a particular rendition.

Each rendition includes "content" (such as text and markup) and may include a collection of "resources" (such as images, fonts, and the like). Although not necessary, it is envisioned that the multiple renditions likely have different content because the markup necessary to lay out the content on different devices varies from rendition to rendition. However, the renditions may frequently refer to the same resources. It is an aspect of the invention that each shared resource appears only once in the compound file **201.** Unlike some multipart document formats, the compound file **201** allows one instance of a particular resource to be contained within the storage **205** and used in conjunction with any number of the multiple renditions **202, 203, 204.**

In addition, the ability to combine in a single file an editable rendition (e.g. a word processing document) with a fixed-format rendition (e.g., XAML) is an advantage of the invention over other document formats. These different file types can coexist in a multiple rendition document, and the proper rendition will be used based on multiple factors, such as software availability at consumption time or a user's intent (e.g., collaborate/edit document versus printing, or the like).

The rendition manager **210** may be an operating system service or function that is responsible for making document files available to the applications. The compound file **201** exposes standard (e.g., Component Object Model or "COM") interfaces so that each rendition may be manipulated as a whole or as individual streams. Any one or more of the applications **220, 221, 222** may open and edit the compound file **201** by requesting access to it through the rendition manager **210.** The rendition manager **210** opens the compound file **201** and returns the interfaces for a particular rendition to the requesting application based on the type of the requesting application or other criteria.

FIGURE 3 is a graphical representation of the structure of the compound file **201** represented as a tree hierarchy. Compound files are commonly considered as a "file system within a file." Within the compound file **201** is a hierarchy of "storages," which are analogous to directories in a file system, and "streams," which are analogous to files in a file system.

In accordance with the invention, the content of each rendition is placed in a separate stream or collection of streams. Thus, the data which would represent an entire document file under a conventional document format is stored in a particular stream of the compound file **201.** Each resource referred to by one or more of the renditions is also placed in a separate stream. However, the several resources may be collected under a common storage.

Under the root **301** of this example hierarchy are several streams (i.e., stream **302,** stream **304,** and stream **306)** and one storage **308.** In this example, stream **302** contains a first rendition (rendition A), stream **304** contains a second rendition (rendition B), and stream **306** contains a third rendition (rendition C). In accordance with this example, each of those renditions represents a different visual representation of a document.

A special stream, named "\x0006RenditionList" **310** in this example, contains meta information about each rendition in the compound file **201.** The rendition list **310** includes a table **312** that describes each of the renditions in the compound file **201.** The table **312** is described below in detail in conjunction with Figure 4. Briefly stated, the table **312** identifies each component of each rendition in the compound file **201.**

FIGURE 4 is a tabular representation of the information that may be stored in the rendition list **310.** The rendition list **310** may be represented as a table **401** in which each row is associated with one rendition. In one embodiment, the columns in the table include a rendition ID column **410,** a file names column **412,** a rule's column **414,** and a description column **416.** What follows is a brief description of the purpose of each of those columns:

| **Column name** | **Column description** |
|---|---|
| Rendition ID | A textual identifier, unique among the renditions in a document but not necessarily unique across documents. Used by the APIs that create, delete, and modify renditions, to specify which rendition to operate on. An application could link to a particular Rendition ID and manipulate the several components of the rendition as an entity. |
| File Names | The list of files, streams, and/or storages (which implies everything under the storage) used in the rendition. The same stream or file name can occur in the "File Names" column of more than one row (rendition), allowing resources to be shared among renditions. The names are stored as essentially a "path" in the compound file to the subject resource. |
| Rules | Used by APIs which automatically select a rendition to display based on characteristics of the device on which the document is being viewed or other criteria. In a simple implementation, the rules column may include a MIME-type for the first file identified in the file names column. |
| Description | A human-readable description of the rendition, e.g., "Fixed-format rendition for 8-1/2 x 11 paper". Intended to be displayed to the end-user to describe what renditions a compound file contains, or to select a rendition to display. The description may be stored in any language, such as the local language of the user. |

The format of the rendition table allows one stream in each rendition to be designated as a "start stream" for the rendition. When that rendition is requested, the start stream is the first stream to be presented.

Special notice should be made about the Rules information. As noted, the information in the Rules column is intended to enable a decision about which rendition to return to a particular application. Accordingly, the rules information may be as simple as a MIME-type associated with a particular file of the rendition, such as the first file identified in the file names column. In this case, a process could walk the list of renditions searching for a MIME-type that is compatible with the particular requesting application. Other identifiable characteristics could equally serve as the selection criteria, such as a logical resolution and geometry, a color depth, a human language, or reader visual ability classification.

Alternatively, the selection criteria included in the rules column may be relatively sophisticated. For instance, a reference could be included in the rules column that points to code either in the compound file or elsewhere that assists in the selection process. In addition, more complex information could be included in the rules column that describes each rendition in a way sufficient to assist a particular application or the rendition manager **210** identified the appropriate rendition. These and other alternatives will become apparent to those skilled in the art.

### Discussion of Particular Examples of the Invention

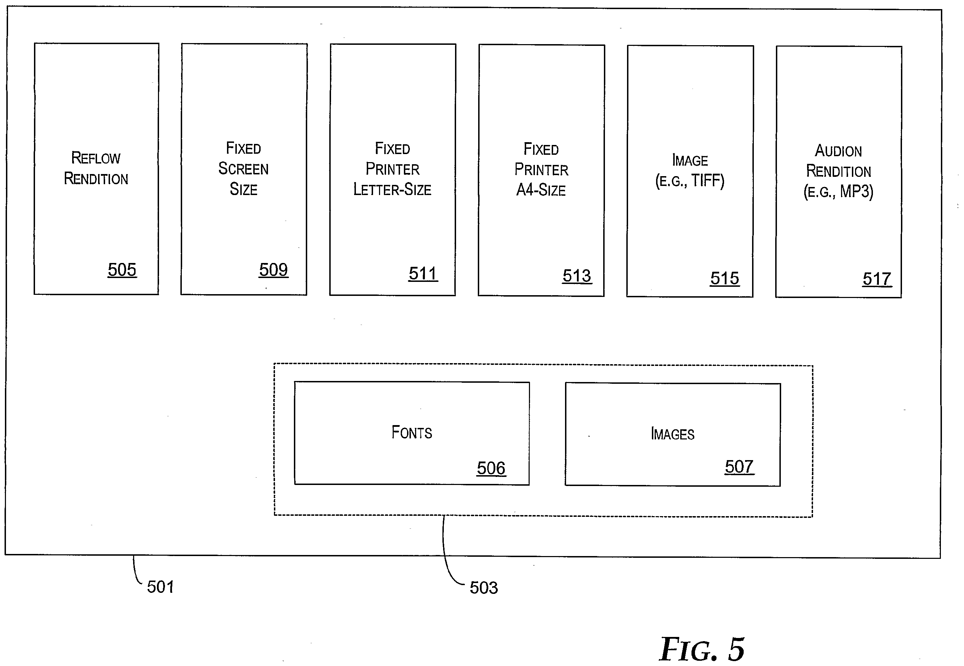

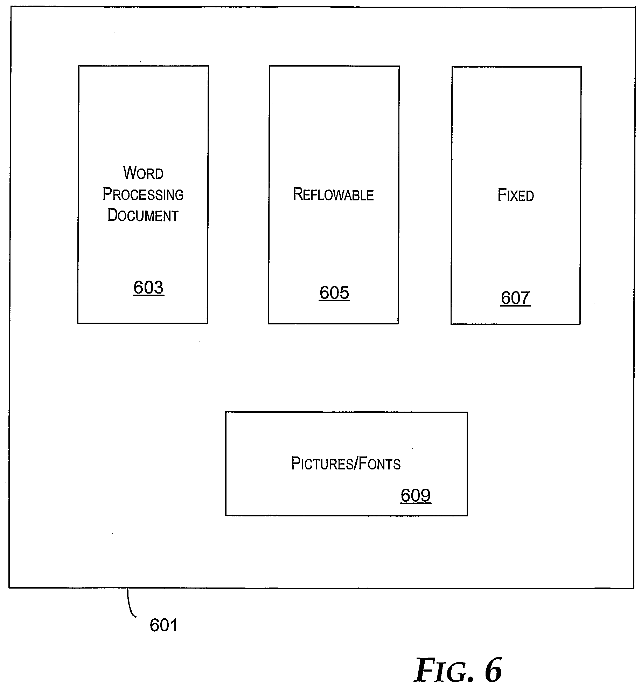

Particular implementations of the invention will now be described though example with reference to FIGUREs 5 and 6, which together illustrate how the invention may be used to create a compound file to be used with a document reader type of application (FIGURE 5) and for a word processing type of application.

FIGURE 5 is a graphical illustration of one particular example of a compound file **501** having several streams and one storage **503.** In this example, the compound file **501** includes six different renditions of the same document substance. A reflow rendition **505** is included that represents the document substance in a manner that is resizable according to the particular display device. The reflow rendition **505** includes markup language and the like that may refer to particular fonts **506** or images **507.** Accordingly, those fonts **506** or images **507** are stored in one or more separate streams that are contained within the storage **503.**

A screen-sized fixed rendition **509** is also included that may be designed for display on a particular screen size. For instance, the screen-sized fixed rendition **509** may be of a fixed size that displays properly on a monitor having a resolution of **800** pixels by **600** pixels. Alternatively, the screen-sized fixed rendition **509** may be sized for display on a small, such as a pocket-sized, handheld device.

Two renditions are included and are fixed-sized for particular computer printers. For instance, a letter-sized rendition **511** includes a version of the document substance that is fixed-format and prints properly on letter-sized paper. An A4-sized rendition **513** includes a version of the document substance that is fixed-format and prints properly on A4-sized paper. As mentioned, the two printer renditions may also reference the resources within the storage **503.**

The compound file **501** may also include an image rendition **515** of the document substance and an audio representation **517** of the document substance. For example, the document substance may be the contents of a book, in which case the image rendition **515** may be a photograph of pages of the book, and the audio representation **517** may be an audible narration of the contents of the book. It will be appreciated that the renditions need not necessarily be limited to visual representations of the same contents.

FIGURE 6 is a graphical illustration of another example of a compound file **601** having several streams. In this example, the compound file **601** includes a word processing stream **603,** a reflow stream **605,** and a fixed-format stream **607.** In this instance, the word processing stream **603** may have embedded pictures and fonts that are stored in the compound file **601** in a common resource stream **609.** The rendition list (not shown) for this particular example could then include rendition information that allows a particular rendition two reference portions of the resource stream six or nine. This could be achieved by using substream references when identifying the files in the file names portion of the rendition list.

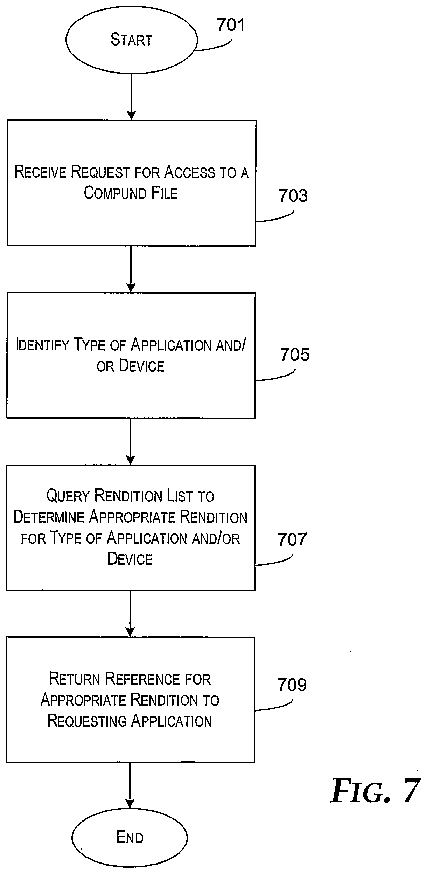

FIGURE 7 is a functional block diagram generally illustrating steps of a process for making multiple renditions of a document available through a compound file. The process **700** begins at starting block **701** where a compound file exists that includes multiple representations of similar document content.

At block **703,** a request is received for access to the compound file. The request may identify a particular requesting application and include information useful in determining an appropriate rendition, such as particular format supported by the application, and the like.

At block **705,** the particular type of application, as well as other criteria, is identified from the request. Any additional information necessary for identifying the appropriate rendition may be queried from the application or some other source. For instance, the particular type of device (e.g., a pocket-sized computer or a desktop computer) upon which the compound file resides may be queried.

At block **707,** a rendition list associated with the compound file is queried to determine the appropriate rendition for the application. As discussed in detail above, the rendition list may be queried to identify a particular rendition having a MIME-type that is consistent with the application. Alternatively, the rendition list may include a set of rules or conditions that may be applied or compared to the criteria associated with the application.

At block **709,** a reference (e.g., a set of interfaces) for the appropriate rendition is returned to the requesting application. At this point, the requesting application can manipulate the rendition as an entity. The requesting application is presented with a representation of the document content that is intended for the application or the particular device.

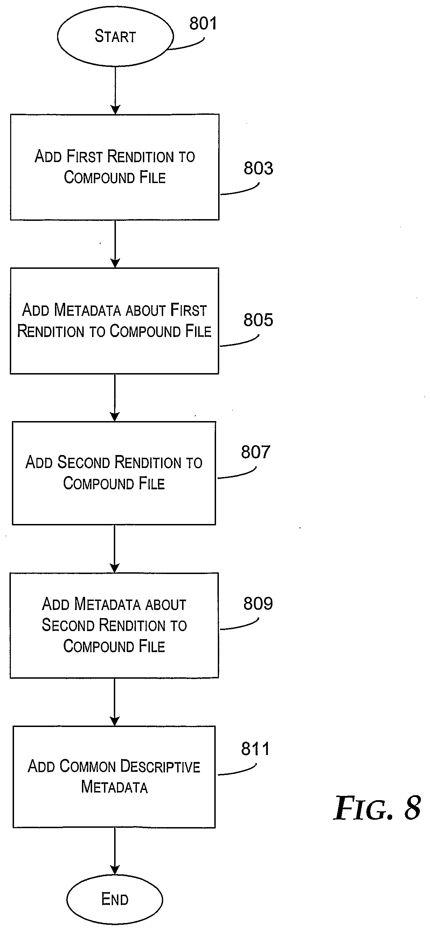

FIGURE 8 is a logical flow diagram generally illustrating a process for creating a multiple rendition file, in accordance with the invention. The process **800** begins at starting block **801,** where an application or applications have created multiple renditions of document content and are preparing to write the multiple renditions to a compound file.

At block **803,** an instruction is issued to add a first rendition to the compound file. The first rendition may be a visual representation of the document content in editable form, such as a word processing document. Similarly, the first rendition may be in any one of many other representations of the document content.

At block **805,** metadata about the first rendition is added to the compound file. As stated above, the metadata may reside under a rendition list stream of the compound file. The metadata describes the first rendition, including any files that may be a part of the first rendition. The metadata may also include rules or selection criteria to enable the selection of an appropriate rendition based on a requesting application.

At block **807,** a second rendition is added to the compound file. The second rendition may also be a visual representation of the document content, or it may be some other form, such as an audible representation or image representation.

At block **809,** metadata about the second rendition is added to the compound file. Again, the metadata describes the second rendition, including any files that may be a part of the second rendition. The metadata may also include rules or selection criteria to enable the selection of an appropriate rendition based on a requesting application.

At block **811,** common descriptive metadata is added to the compound file, such as information about the author of the document or other rendition-neutral information about the document or the compound file. At this point, the compound file includes two complete renditions, which may or may not share resources. This compound file may now be manipulated using a process similar to the one described above in conjunction with FIGURE 7.

## Claims

1. A computer implemented method for storing multiple renditions of a document in a single compound file (201), the method comprising:
adding (803) a first rendition (202) of the document to the compound file, said first rendition being a first representation of the document, wherein the first rendition comprises a first content and a first collection of resources;
adding (805) metadata about the first rendition to a first rendition entry of a rendition list (310; 410) comprised in the compound file, said metadata about the first rendition identifying the first content and the first collection of resources used in the first rendition;
adding (807) a second rendition (203) of the document to the compound file, said second rendition being a second representation of the document, wherein the second rendition comprises a second content and a second collection of resources
adding (809) metadata about the second rendition to a second rendition entry of the rendition list comprised in the compound file, said metadata about the second rendition identifying the second content and the second collection of resources used in the second rendition,
wherein the first collection of resources and the second collection of resources share resources,
wherein each of the shared resources is included only once in the compound file.

2. The computer implemented method of claim 1, wherein the first rendition comprises an audible representation of the document.

3. The computer implemented method of claim 1, wherein each rendition entry having at least a rendition identifier (410) and a files identifier (412), the rendition identifier being operative to uniquely identify a particular rendition with which the rendition entry is associated, and the files identifier being operative to identify each file associated with the particular rendition.

4. The computer implemented method of claim 3, wherein each rendition entry further comprises at least a rules entry (414) that includes criteria useful for determining which rendition is appropriate for a particular device or application.

5. The computer implemented method of claim 4, wherein each rendition entry further comprises at least a description entry (416) that includes human-readable information associated with the particular rendition.

6. A computer-readable medium encoded with a data structure for storing multiple renditions of a document, comprising:
a first rendition (202) of the document, said first rendition being a first representation of the document, wherein the first rendition comprises a first content and a first collection of resources;
a second rendition (203) of the document, said second rendition being a second representation of the document, wherein the second rendition comprises a second content and a second collection of resources,
wherein the first collection of resources and the second collection of resources share resources;
a storage (205) comprising the first collection of resources and the second collection of resources, wherein each of the shared resource is included in the storage only once; and
a rendition list (310, 410) comprising at least a first rendition entry and a second rendition entry, wherein the first rendition entry comprises metadata about the first rendition, and wherein the second rendition entry comprises metadata about the second rendition, said metadata about the first rendition identifying the first content and the first collection of resources used in the first rendition, and said metadata about the second rendition indentifying the second content and the second collection of resources used in the second rendition.

7. The computer-readable medium of claim 6, wherein the list includes information about each rendition including an identifier (410) for each rendition and a list of files (412) associated with each rendition.

8. The computer-readable medium of claim 6, wherein the list further includes selection criteria (414) for associating a particular rendition with a particular application or device.

9. The computer-readable medium of claim 6, wherein the data structure further comprises an interface for manipulating the first rendition as an entity.

## Patentansprüche

1. Computerimplementiertes Verfahren zum Speichern mehrerer Wiedergabearten eines Dokuments in einer einzigen zusammengesetzten Datei (201), wobei das Verfahren umfasst:
Hinzufügen (803) einer ersten Wiedergabe (202) des Dokuments zu der zusammengesetzten Datei, wobei die erste Wiedergabe eine erste Repräsentation des Dokuments ist, wobei die erste Wiedergabe einen ersten Inhalt und eine erste Sammlung von Ressourcen umfasst;
Hinzufügen (805) von Metadaten über die erste Wiedergabe zu einem ersten Wiedergabeeintrag einer Wiedergabeliste (310; 410), die in der zusammengesetzten Datei enthalten ist, wobei die Metadaten über die erste Wiedergabe den ersten Inhalt und die erste Sammlung von Ressourcen identifizieren, die in der ersten Wiedergabe verwendet werden;
Hinzufügen (807) einer zweiten Wiedergabe (203) des Dokuments zu der zusammengesetzten Datei, wobei die zweite Wiedergabe eine zweite Repräsentation des Dokuments ist, wobei die zweite Wiedergabe einen zweiten Inhalt und eine zweite Sammlung von Ressourcen umfasst;
Hinzufügen (809) von Metadaten über die zweite Wiedergabe zu einem zweiten Wiedergabeeintrag der Wiedergabeliste, die in der zusammengesetzten Datei enthalten ist, wobei die Metadaten über die zweite Wiedergabe den zweiten Inhalt und die zweite Sammlung von Ressourcen identifizieren, die in der zweiten Wiedergabe verwendet werden,
wobei die erste Sammlung von Ressourcen und die zweite Sammlung von Ressourcen Ressourcen teilen,
wobei jede der geteilten Ressourcen nur einmal in der zusammengesetzten Datei enthalten ist.

2. Computerimplementiertes Verfahren nach Anspruch 1, wobei die erste Wiedergabe eine hörbare Repräsentation des Dokuments umfasst.

3. Computerimplementiertes Verfahren nach Anspruch 1, wobei jeder Wiedergabeeintrag mindestens einen Wiedergabekennzeichner (410) und einen Dateienkennzeichner (412) aufweist, wobei der Wiedergabekennzeichner dazu dient, eine bestimmte Wiedergabe, die dem Wiedergabeeintrag zugeordnet ist, eindeutig zu kennzeichnen und der Dateienkennzeichner dazu dient, jede der bestimmten Wiedergabe zugeordnete Datei zu kennzeichnen.

4. Computerimplementiertes Verfahren nach Anspruch 3, wobei jeder Wiedergabeeintrag ferner mindestens einen Regeleintrag (414) umfasst, der Kriterien enthält, die zum Bestimmen, welche Wiedergabe für ein bestimmtes Gerät oder eine bestimmte Anwendung geeignet ist, nützlich sind.

5. Computerimplementiertes Verfahren nach Anspruch 4, wobei jeder Wiedergabeeintrag ferner mindestens einen Beschreibungseintrag (416) umfasst, der für Menschen lesbare Informationen enthält, die der bestimmten Wiedergabe zugeordnet sind.

6. Computerlesbares Medium, das mit einer Datenstruktur zum Speichern mehrerer Wiedergabearten eines Dokuments codiert ist, umfassend:
eine erste Wiedergabe (202) des Dokuments, wobei die erste Wiedergabe eine erste Repräsentation des Dokuments ist, wobei die erste Wiedergabe einen ersten Inhalt und eine erste Sammlung von Ressourcen umfasst;
eine zweite Wiedergabe (203) des Dokuments, wobei die zweite Wiedergabe eine zweite Repräsentation des Dokuments ist, wobei die zweite Wiedergabe einen zweiten Inhalt und eine zweite Sammlung von Ressourcen umfasst,
wobei die erste Sammlung von Ressourcen und die zweite Sammlung von Ressourcen Ressourcen teilen;
einen Speicher (205), der die erste Sammlung von Ressourcen und die zweite Sammlung von Ressourcen umfasst, wobei jede der geteilten Ressourcen nur einmal in dem Speicher enthalten ist; und
eine Wiedergabeliste (310, 410), die mindestens einen ersten Wiedergabeeintrag und einen zweiten Wiedergabeeintrag umfasst, wobei der erste Wiedergabeeintrag Metadaten über die erste Wiedergabe umfasst und wobei der zweite Wiedergabeeintrag Metadaten über die zweite Wiedergabe umfasst, wobei die Metadaten über die erste Wiedergabe den ersten Inhalt und die erste Sammlung von Ressourcen identifizieren, die in der ersten Wiedergabe verwendet werden, wobei die Metadaten über die zweite Wiedergabe den zweiten Inhalt und die zweite Sammlung von Ressourcen identifizieren, die in der zweiten Wiedergabe verwendet werden

7. Computerlesbares Medium nach Anspruch 6, wobei die Liste Informationen über jede Wiedergabe enthält, umfassend einen Kennzeichner (410) für jede Wiedergabe und eine Liste von Dateien (412), die jeder Wiedergabe zugeordnet sind.

8. Computerlesbares Medium nach Anspruch 6, wobei die Liste ferner Auswahlkriterien (414) zum Zuordnen einer bestimmten Wiedergabe zu einer bestimmten Anwendung oder einem bestimmten Gerät enthält.

9. Computerlesbares Medium nach Anspruch 6, wobei die Datenstruktur ferner eine Schnittstelle zum Bearbeiten der ersten Wiedergabe als eine Entität umfasst.

## Revendications

1. Procédé implémenté par ordinateur pour stocker de multiples restitutions d'un document dans un fichier composé unique (201), le procédé comprenant de :
ajouter (803) une première restitution (202) du document au fichier composé, ladite première restitution étant une première représentation du document, dans lequel la première restitution comprend un premier contenu et une première collection de ressources ;
ajouter (805) des métadonnées concernant la première restitution à une première entrée de restitution d'une liste de restitutions (310 ; 410) comprise dans le fichier composé, lesdites métadonnées concernant la première restitution identifiant le premier contenu et la première collection de ressources utilisés dans la première restitution ;
ajouter (807) une seconde restitution (203) du document au fichier composé, ladite seconde restitution étant une seconde représentation du document, dans lequel la seconde restitution comprend un second contenu et une seconde collection de ressources
ajouter (809) des métadonnées concernant la seconde restitution à une seconde entrée de restitution de la liste de restitutions comprise dans le fichier composé, lesdites métadonnées concernant la seconde restitution identifiant le second contenu et la seconde collection de ressources utilisés dans la seconde restitution,
dans lequel la première collection de ressources et la seconde collection de ressources partagent des ressources,
dans lequel chacune des ressources partagées est incluse une seule fois dans le fichier composé.

2. Procédé implémenté par ordinateur selon la revendication 1, dans lequel la première restitution comprend une représentation audible du document.

3. Procédé implémenté par ordinateur selon la revendication 1, dans lequel chaque entrée de restitution a au moins un identifiant de restitution (410) et un identifiant de fichiers (412), l'identifiant de restitution étant opérationnel pour identifier uniquement une restitution particulière à laquelle est associée l'entrée de restitution, et l'identifiant de fichiers étant opérationnel pour identifier chaque fichier associé à la restitution particulière.

4. Procédé implémenté par ordinateur selon la revendication 3, dans lequel chaque entrée de restitution comprend en outre au moins une entrée de règles (414) qui comprend des critères utiles pour déterminer quelle restitution est appropriée pour un dispositif particulier ou une application particulière.

5. Procédé implémenté par ordinateur selon la revendication 4, dans lequel chaque entrée de restitution comprend en outre au moins une entrée de description (416) qui comprend des informations lisibles par être humain associées à la restitution particulière.

6. Support lisible par ordinateur codé à l'aide d'une structure de données pour stocker de multiples restitutions d'un document, comprenant :
une première restitution (202) du document, ladite première restitution étant une première représentation du document, dans lequel la première restitution comprend un premier contenu et une première collection de ressources ;
une seconde restitution (203) du document, ladite seconde restitution étant une seconde représentation du document, dans lequel la seconde restitution comprend un second contenu et une seconde collection de ressources,
dans lequel la première collection de ressources et la seconde collection de ressources partagent des ressources ;
un stockage (205) comprenant la première collection de ressources et la seconde collection de ressources, dans lequel chacune des ressources partagées n'est incluse dans le stockage qu'une seule fois ; et
une liste de restitutions (310, 410) comprenant au moins une première entrée de restitution et une seconde entrée de restitution, la première entrée de restitution comprenant des métadonnées concernant la première restitution, et la seconde entrée de restitution comprenant des métadonnées concernant la seconde restitution, lesdites métadonnées concernant la première restitution identifiant le premier contenu et la première collection de ressources utilisés dans la première restitution, et lesdites métadonnées concernant la seconde restitution identifiant le second contenu et la seconde collection de ressources utilisés dans la seconde restitution.

7. Support lisible par ordinateur selon la revendication 6, dans lequel la liste comprend des informations concernant chaque restitution comprenant un identifiant (410) pour chaque restitution et une liste de fichiers (412) associés à chaque restitution.

8. Support lisible par ordinateur selon la revendication 6, dans lequel la liste comprend en outre des critères de sélection (414) pour associer une restitution particulière à une application particulière ou un dispositif particulier.

9. Support lisible par ordinateur selon la revendication 6, dans lequel la structure de données comprend en outre une interface pour manipuler la première restitution en tant qu'entité.
